# EUROPÄISCHE PATENTANMELDUNG

(11) **EP 1 014 047 A2**
(43) Veröffentlichungstag der Anmeldung: **28.06.2000**
(21) Anmeldenummer: 99125592.8
(22) Anmeldetag: 22.12.1999
(51) Int. Cl.: G01F 23/22

(54) **Behälter mit einem externen Füllstandssensor**

(30) Priorität: 22.12.1998 DE 19859894
(71) Anmelder: Rombold, Albrecht, 70736 Fellbach-Oeffingen (DE)
(72) Erfinder: Rombold, Albrecht, 70736 Fellbach-Oeffingen (DE)
(74) Vertreter: Zipse + Habersack

(57) **Zusammenfassung**

Die vorliegende Erfindung betrifft einen Behälter für flüssige oder feste Füllgüter, insbesondere im Baustoffbereich, dessen Füllstandsanzeige dadurch gebildet ist, dass auf der Außenwand des Behälters ein Material aufgebracht ist, dessen optische Eigenschaften sich in Abhängigkeit von einem direkten oder indirekten physikalischen oder chemischen Kontakt mit dem Füllgut ändern.

## Beschreibung

Die vorliegende Erfindung betrifft einen Behälter z. B. einen Silo oder Container, wie er insbesondere zur Bereitstellung von flüssigen und festen Baumaterialien verwendet wird.

Ein Problem bei der Nutzung derartiger Behälter ist die Füllstandsmessung, die nur entweder durch eine Sichtprüfung von oben oder durch eine Füllstandsanzeige realisierbar ist, die in der Regel relativ aufwendig herstellbar ist.

Es ist daher Aufgabe der vorliegenden Erfindung, einen Behälter zu schaffen, der auf möglichst einfache Weise eine Anzeige der Füllhöhe des in dem Behälter vorgesehenen Füllgutes ermöglicht.

Diese Aufgabe wird erfindungsgemäß durch einen Behälter gemäß Anspruch 1 oder durch ein Verfahren zur Füllstandsanzeige gemäß Anspruch 7 gelöst. Vorteilhafte Weiterbildungen der Erfindung sind Gegenstand der Unteransprüche.

Erfindungsgemäß wird auf den Behälter, insbesondere auf die Außenwand des Behälters ein Material aufgebracht, dessen optische Eigenschaften abhängig von dem direkten oder indirekten physikalischen oder chemischen Kontakt mit dem Füllgut sind. Ein sehr guter physikalischer Kontakt ist beispielsweise der Wärmeübergang vom Füllgut über die Behälterwand auf das sensitive Material. Wenn die Behälterwand mit einem thermochromischen Material versehen ist, wie es beispielsweise aus der EP 873 883 A1 bekannt ist, stellt sich die Farbe des thermochromischen Materials entsprechend der Temperatur der Behälterwandung ein. Im Bereich der Füllhöhe des Füllgutes ist dies eine relativ gleichmäßige Färbung, die der Temperatur des Füllgutes, z. B. eines Flüssigputzes entspricht. Über dem Füllgut hat die Außenwand eine Temperatur, die in der Regel ziemlich exakt der Außentemperatur entspricht und in der Regel zumindest um einige Grad C° von der Temperatur des Füllgutes abweicht. Dies ist bedingt durch die Wärmekapazität des Füllgutes, das Temperaturschwankungen über den Tag ausgleicht. Bei einer Berichtung des Silos oder Containers mit einem schmalen vertikalen Strich könnte man somit die Füllhöhe anhand der Verfärbung des Materials relativ genau ablesen.

Selbstverständlich funktioniert dieser Mechanismus nicht nur über dem Wärmeübergang, sondern beispielsweise über die Feuchtigkeit, den elektrischen Widerstand und andere physikalische oder chemische Parameter, die sich innerhalb Abhängigkeit davon ändern, ob ein bestimmter Abschnitt mit Füllgut gefüllt ist oder nicht.

Prinzipiell lassen sich besondere Füllmaterialien wie z. B. zu kühlende Flüssigkeiten oder Suspensionen bzw. Emulsionen sehr viel leichter mit thermochromischen und sogar metachromischen Substanzen detektieren, da sich in diesem Fall die Temperatur der Wand bis zur Füllhöhe deutlich von deren Temperatur im nicht gefüllten Bereich des Behälters unterscheidet. Derart zu verwendende metachromische Substanzen sind beispielsweise in der EP 677 538 oder in den US Patentanmeldungen 4,028,118, 4,720,301 oder 4,732,810 dargestellt.

Eine mögliche thermochromische Verbindung hat z. B.
a) eine Elektronen abgebenden farbentwickelnde organische Substanz,
b) wenigstens eine Elektronen annehmenden Verbindung aus einer Alkoxyphenolverbindung der nachstehend genannten Formel 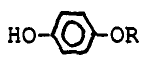 wobei R eine Alkylgruppe darstellt, und
c) eine Verbindung, die als Reaktionsmedium dient um eine reversible Elektronen gebende/nehmende Reaktion bei den Komponenten a) und b) hervorzurufen, wobei die letzte Verbindung vorzugsweise auch aus offenkettigen Hydrocarbonen, alizyklischen Hydrocarbonen, aromatischen Hydrocarbonen und halogenierten Hydrocarbonen, Estern, Sulfiden und Ketonen ausgewählt wird. Als Alkylgruppe R wird vorzugsweise eine gradkettige oder verzweigte Alkylgruppe mit 3-18 Kohlenstoffatomen verwendet. Als elektronengebende, farbentwickelnde, organische Komponente a) können Diphenylmethanephathalide, Phenylindolylphathalide, Indolylphathalide, Diphenylmethaneazaphthalide, Phenylindolylazaphthalide, Fluorane, Styrylguinoline und Diazarhodaminlactone verwendet werden. Als elektronenannehmende Alkoxyphenolverbindung b) können vorzugsweise p-n-Propyloxyphenol, p-n-Butyloxyphenol, p-n-Pentyloxyphenol ect. verwendet werden. Die reversible thermochromische Verbindung kann z.B. in Form von Mikrokapseln in den Anstrich bzw. die Beschichtung eingebracht werden.

Bei einer derartigen Verbindung hängt die Farbdichte von der Temperatur ab. Durch Unterlegen dieser Beschichtung mit einer andersfarbigen Beschichtung kann somit ein Temperaturprofil angezeigt werden.

Selbstverständlich können nicht nur Materialien verwendet werden, deren optischen Eigenschaften von der Temperatur abhängen, sondern auch Substanzen deren Eigenschaften von der Feuchtigkeit oder dem Druck abhängen.

Wenn beispielsweise das Füllgut in der Regel eine niedrigere Temperatur als das Umgebungsgut hat, bildet sich in der Regel an der Außenwand des Behälters bei einem ausreichenden Temperaturunterschied ein Feuchtigkeitsfilm aus. Dieser Feuchtigkeitsfilm kann zur Farbveränderung des Materials genutzt werden, wobei man auch in diesem Fall die Füllhöhe des Containers ersehen kann. Derartige Materialien, die ihre Farbe in Abhängigkeit von der Feuchtigkeit ändern sind an sich bekannt.

Vorzugsweise ist das Material senkrecht zur Füllrichtung, d. h. bei einem stehenden Behälter in der Regel vertikal im Bereich eines schmalen Abschnittes auf die Außenwand des Behälters aufgebracht. Eine Einflußnahme des Füllgutes auf das sensitive Material kommt insbesondere indirekt über die Wand zustande, entweder durch Wärmetransport oder über eine mechanische Veränderung der Wand, z. B. Ausdehnung bei Kunststoffbehältern.

Prinzipiell kann ein derartiges Material auch an der dem Füllgut zugewandten Innenseite des Behälters vorgesehen sein, in welchem Fall jedoch ein durchscheindender Bereich des Behälters zur Außenwand vorgesehen sein muß, falls die Ablesung des Füllstandes von Außen erfolgen soll.

Man kann selbstverständlich auch den gesamten Behälter mit dem sensitiven Material beschichten, was jedoch in der Regel aus Kostengründen eher auszuschließen ist. Vorzugsweise wird das Material in Form einer Temperatur oder feuchtigkeitssensitiven Farbschicht auf den Behälter, insbesondere direkt auf die Metall- oder Kunststoffwand des Behälters aufgebracht.

Der Vorteil der erfindungsgemäßen Füllstandsanzeige besteht darin, dass keine separaten Füllstandsanzeige, Schaubereich etc. an dem Behälter vorgesehen werden müssen, die in der Regel entweder mit einem beträchtlichen Aufwand verbunden sind und/oder sogar die homogene Struktur des Behälters beeinträchtigen können.

Die Erfindung eignet sich für Baustoffbehälter im Außenbereich aber selbstverständlich auch für Behälter von zu kühlenden Flüssigkeiten und allgemein chemischen oder festen Substanzen im Labor und Produktionsbereich, insbesondere auch bei Raffinerien etc. Wenn das Material auf der Innenwand des Behälters aufgebracht wird, kann selbstverständlich auch jede Farbsubstanz verwendet werden, die ihre Farbe in direktem Kontakt mit dem Füllgut, z. B. durch eine chemische Veränderung reversibel ändert. Wenn nun neben einer derartigen Auftragslinie eine metrische Skala vorgesehen ist, läßt sich beispielsweise der Kontrast für die Ablesung des Füllstands wesentlich erhöhen, insbesondere bei klaren Flüssigkeiten deren Füllhöhe auf den ersten Blick nicht genau ersichtlich ist. Ein derartiges chemisch reaktives Farbmaterial muß selbstverständlich im Hinblick auf das eingefüllte flüssige Füllgut sensitiv ausgebildet sein, weshalb hier keine eingängigen Formeln für das sensitive Material wiedergegeben werden können. Farbmaterialien, die ihre Farbe in Kontakt mit Wasser oder Lösungsmitteln ändern, sind jedoch hinlänglich bekannt.

In einer alternativen Ausführung der Erfindung kann auch ein magnetisch sensitives Material auf den Behälter aufgebracht werden, in welchem Fall durch das Material eine Beeinflussung eines angelegten Magnetfeldes durch das Füllgut detektiert wird. In gleicher Weise kann mit einem elektrisch sensitiven Material bei Anlegen eines definierten elektrischen Feldes an den Behälter verfahren werden.

## Patentansprüche

1. Behälter für Füllgut, insb. Baustoffe,
dadurch gekennzeichnet,
daß ein quer zur Füllrichtung, insb. vertikal, verlaufender Abschnitt des Behälters mit einem Material versehen ist, das seine optischen Eigenschaften in Abhängigkeit von einem direkten oder indirekten physikalischen oder chemischen Kontakt mit dem Füllgut ändert.

2. Behälter nach Anspruch 1,
dadurch gekennzeichnet,
daß das Material seine Farbe und/oder Transparenz in Abhängigkeit von der Umgebungstemperatur ändert.

3. Behältern ach Anspruch 1 oder 2,
dadurch gekennzeichnet,
daß das Material seine Farbe in Abhängigkeit vom Druck ändert.

4. Behälter nach einem der vorhergehenden Ansprüche,
dadurch gekennzeichnet,
daß das Material seine Farbe in Abhängigkeit von der Umgebungsfeuchtigkeit ändert.

5. Behälter nach einem der vorhergehenden Ansprüche,
dadurch gekennzeichnet,
daß das Material seine Farbe in Abhängigkeit von dem elektrischen Widerstand des umgebenden Mediums ändert.

6. Behälter nach einem der vorhergehenden Ansprüche,
dadurch gekennzeichnet,
daß das Material in Form eines schmalen senkrechten Strichs an der Außenwand des Behälters aufgebracht ist.

7. Verfahren zur Füllstandsanzeige von Behältern, insbesondere für flüssige und feste Baustoffe,
dadurch gekennzeichnet,
daß zumindest ein sich senkrecht zur Füllrichtung des Füllgutes erstreckender Abschnitt des Behälters mit einem Material beschichtet ist, das in Abhängigkeit von einem direkten oder indirekten Kontakt mit Füllgut seine optischen Eigenschaften ändert.

8. Verfahren nach Anspruch 7,
dadurch gekennzeichnet,
daß ein Material verwendet wird, welches in Abhängigkeit von der Temperatur seine Farbe wechselt.

9. Verfahren nach Anspruch 7 oder 8,
dadurch gekennzeichnet,
daß ein Material verwendet wird, welches in Abhängigkeit von der Feuchtigkeit seine Farbe wechselt.

10. Verfahren nach Anspruch 7, 8 oder 9,
dadurch gekennzeichnet,
daß ein Material verwendet wird, welches in Abhängigkeit vom elektrischen Widerstand der Behälterwand oder eines umgebenden Mediums seine Farbe wechselt.
